# EUROPEAN PATENT SPECIFICATION

(11) **EP 1 181 512 B1**
(45) Date of publication and mention of the grant of the patent: **07.04.2004**
(21) Application number: 00936826.7
(22) Date of filing: 25.05.2000
(51) Int. Cl.: G01J 3/46, B29C 45/18, B29C 47/10, B01F 15/04

(54) **PROCEDURE FOR COLOURING AND/OR COMPOUNDING THERMOPLASTIC AND/OR THERMOSETTING POLYMERS**
VERFAHREN ZUM EINFÄRBEN UND/ODER MISCHEN VON THERMOPLASTISCHEN UND/ODER THERMOSTATOPLASTISCHEN POLYMEREN
PROCEDE DE COLORATION ET/OU DE COMPOUNDAGE DE THERMOPLASTIQUE ET/OU DE DURCISSEMENT PAR LA CHALEUR DE POLYMERES

(30) Priority: 26.05.1999 IT MI991163
(43) Date of publication of application: 27.02.2002
(73) Proprietor: Colheng S.a.s., 36015 Schio-Vicenza (IT)
(72) Inventor: FOCHESATO COLOMBANI, Filippo, I-36015 Schio-Vicenza (IT)
(74) Representative: De Gregori, Antonella
(86) International application number: PCT/EP2000/004913
(87) International publication number: WO 2000/073752

(56) References cited:
- EP-A- 0 216 006
- EP-A- 0 767 362
- DE-A- 2 245 022
- DE-A- 3 503 361
- GB-A- 1 119 199
- GB-A- 2 249 987
- JP-A- 6 297 509
- US-A- 5 568 266
- US-A- 5 595 799
- US-A- 5 756 020
- PATENT ABSTRACTS OF JAPAN vol. 1995, no. 01, 28 February 1995 (1995-02-28) & JP 06 297509 A (MAZDA MOTOR CORP), 25 October 1994 (1994-10-25)
- DATABASE WPI Section Ch, Week 198522 Derwent Publications Ltd., London, GB; Class A32, AN 1985-133217 XP002149120 & SU 1 122 517 A (PLOTNIKOV A I), 7 November 1984 (1984-11-07)
- PATENT ABSTRACTS OF JAPAN vol. 004, no. 147 (M-036), 16 October 1980 (1980-10-16) & JP 55 101412 A (JAPAN STEEL WORKS LTD:THE), 2 August 1980 (1980-08-02)
- PATENT ABSTRACTS OF JAPAN vol. 011, no. 050 (M-562), 17 February 1987 (1987-02-17) & JP 61 213121 A (NIPPON ESTER CO LTD), 22 September 1986 (1986-09-22)

## Description

This invention relates to a process for colouring and/or compounding thermoplastic and/or thermosetting polymers, a device for the implementation of that process.

Some methods of colouring and/or compounding thermoplastic and/or thermosetting polymers in the press, ie. directly at the injection-moulding stage or at the blow-moulding stage, are known in the present state of the art.

However, in the case of technopolymers such as ABS, PPE, PC, etc., the plastic is basically coloured by adding pure pigments during the extrusion process, ie. prior to the injection-moulding stage or prior to the blow-moulding stage.

In view of the low mixing capacity of the press and the limited dispersibility of the colorants used, it is impossible to colour this type of polymer at the injection-moulding stage or at the blow-moulding stage.

In the case of other polymers, such as PE, PVC, PP and PS, only top-grade polymers, ie. those without their own colour, can be coloured and/or compounded. For this purpose concentrates of colorant are pre-dispersed in the same resin that makes up the polymer to be coloured and/or compounded, and extruded in the desired colour, for example in the form of granules.

These pre-concentrates of colorant, called master batches, are currently available in the form of cylindrical granules of various sizes (ranging between 0.5 and 2 cm), or in some cases in the form of coarsely ground polymers. They are prepared by drawing in a twin-screw extruder.

Master batches have a given matrix resin as their base, and can only be used for polymers composed of or compatible with the same matrix because of the partial or complete immiscibility of polymers having different matrix resins.

As already stated, the master batch consequently only allows exact colouring of a neutral polymer, ie. one without its own colour, which has the same matrix as the master batch or a matrix compatible with it. It is impossible to use the master batch to colour a polymer which already has its own colour, as the final colour will be different from that of the colorant because of the colour contributed by the polymer.

Moreover, two master batches of different colours cannot be mixed directly in the injection press or in the blow-moulding press to obtain a uniform third colour, because the low mixing capacity of the press would produce great irregularities and defects, giving rise to an end product presenting mottling and streaks.

It is therefore impossible to use colour matching techniques, ie. techniques which mix two or more colours to obtain a uniform third colour, directly at the injection-moulding stage or at the blow-moulding stage.

The present state of the art thus only allows some classes of polymers to be coloured in the press, directly during the injection-moulding stage or the blow-moulding stage; colouring takes place with the use of master batches directly in the press, but can only be applied to neutral polymer resins, with no colour of their own, which have the same matrix as the master batch or a compatible matrix, and the master batch must already have all the necessary colorants dispersed in it and be usable alone, not in combination with other colouring master batches. In the case of other types of polymer, the colorant is added during the extrusion stage which precedes injection moulding or blow moulding.

Colouring with master batches is based on general parameters that are widely used in injection moulding; the result is that even when the same master batch is used, very different shades of colour may be obtained under different conditions and with different presses and moulds.

The use of master batches does not allow the polymer to be corrected for colour and compounded at the same time to produce a product with particular physical characteristics; for example, fillers of mineral origin cannot be added to produce a more rigid product. In fact, the addition of filler alters the basic colour of the polymer, and if colouring is performed with master batches, the desired end result is not obtained.

In the case of translucent products or those with low opacity such as articles made of transparent or coloured PP, in view of the low dispersibility of the master batches it is necessary to work with master batches with a very low pigment concentration (5-10%), which are much more expensive because they present higher unit extrusion costs for the same amount of colorant.

The preparation of a master batch to the customer's specific colour indication, which requires the design of a specific formula, usually takes the master batch manufacturer 2 to 4 weeks, thus involving long waiting times for the moulder between the design of a plastic article moulded in a new colour and its actual production.

The process and the device in accordance with this invention eliminate the drawbacks of the known technique.

In particular, the purpose of this invention is to offer a process and a device that allow practically any thermoplastic and/or thermosetting polymer to be coloured and/or compounded directly at the injection-moulding stage or at the blow-moulding stage, a wide variety of colours in all possible shades being produced by mixing a few monochrome colouring products compatible with all plastics.

A further purpose of this invention is to offer a process and a device which allow already coloured, recycled and post-consumption products to be coloured and/or compounded to produce the exact colour required.

These and other purposes are achieved in accordance with this invention.

In particular, this invention relates to a process for colouring and/or compounding thermoplastic and/or thermosetting polymers directly during the injection-moulding stage or the blow-moulding stage, the method comprising the following stages:
1) a first colour-matching stage at which the intrinsic colour of the polymer to be coloured and/or compounded is measured and compared with a specimen of the colour to be obtained, said colour matching stage taking account of all variables depending on the type of press, the form of the injection and the mould and the process conditions;
2) identifying on the basis of the above comparison the exact qualitative and quantitative composition of the colorants and/or additives needed to obtain the desired final colour;
3) loading a correspondingly weighed mixture thus obtained into a metering unit where it is precisely metered in a predetermined, measured amount and conveyed to the flow of thermoplastic and/or thermosetting granules of said polymer to be coloured and/or compounded;
4) injection-moulding or blow-moulding the so mixed material.

The additives can be added directly in the press, instead of to the mixture of colours, by premixing them with the thermoplastic and/or thermosetting granules to be coloured, or adding them continuously with a dedicated metering unit.

This invention also relates to a device for the implementation of the process in accordance with this invention which comprises a manual or automatic weighing system (11) for weighing the colorants identified and/or the additives to be loaded, a rotary mixer (12), a manual or automatic loading system (13) for loading the colorant and/or additive mixture, a hopper (14) followed by a metering unit (15) connected to a microprocessor for controlling the metering unit, said metering unit being positioned on an injection-press or on a blow-moulding press (17), said press being connected to a mould (19), the weighing system (11), the loading system (13) and the metering unit (15) being connected to a control and processing system connected to a spectrophotometer, said spectrophotometer measuring the spectrum of a specimen of the desired colour and the intrinsic colour of the thermoplastic and/or thermosetting polymer to be coloured, these data being processed by the control and processing system giving the precise and quantitative indication of the colorants and/or additives to be used to obtain the desired final colour.

A moulded article coloured and/or compounded in accordance with the process forming the subject of this invention, is disclosed. The process according to the present invention also uses colorants in the form of microgranules or microflakes, constituted by a concentrate of colorants and/or additives dispersed in a chemical base, mixed together and/or with additives in a colouring and/or compounding process in injection moulding or blow-moulding.

The process according to the present invention further uses colorants in the form of microgranules and microflakes, constituted by a concentrate of colorants and/or additives dispersed in a base composed of mixtures of esters of fatty acids with a melting point of approx. 80°C, the said concentrate being obtained by mixing in a turbomixer or an extruder with a vibrating head, or obtained by any other mixing method, the said colorants, known by the tradenames LEDisperse® and Holcobatch®, being mixed together and/or with additives in a colouring and/or compounding process in injection moulding or blow-moulding.

The process according to the present invention also uses colorants in the form of microgranules or microflakes, constituted by a concentrate of colorants and/or additives dispersed in a polymer base, such as master batches, mixed together and/or with additives in a colouring and/or compounding process in injection moulding or blow-moulding.

The on-line mixer should preferably be the rotating-shaft type.

The main advantage of the process in accordance with the invention is that it can be used to colour and/or compound numerous thermoplastic and/or thermosetting polymers, producing a wide variety of colours in all possible shades by mixing a few monochrome colorant products compatible with all plastics. Above all, the process in accordance with this invention can be used with coloured, recycled or post-consumption starting products to obtain the exact colour desired.

The process in accordance with this invention also enables numerous thermoplastic and/or thermosetting polymers to be compounded and modified chemically during the injection-moulding stage or during the blow-moulding stage, using pure fillers and additives, not only fillers partly dispersed in a matrix resin; in other words, granules pre-extruded and pre-compounded with additives, also known as master batches, are not used.

The characteristics and advantages of the product in accordance with this invention will become clear from the following detailed description, provided by way of example and not of limitation.

In particular, the process in accordance with this invention can be applied to the following thermoplastic polymers: high- and low-density polyethylene (HDPE and LDPE), linear polyethylene (LLDPE), acrylonitrile-butadiene-styrene (ABS), polypropylene (PP), polymethyl methacrylate (PMMA) and its copolymers, polyethylene terephthalate (PET) and its copolymers, polybutylene terephthalate (PBT) and its copolymers, polycarbonate (PC) and its copolymers, crystal polystyrene (GPPS), high-impact polystyrene (HIPS), styrene acrylonitrile (SAN), styrene-based elastomers and thermoplastic rubbers (SB, SBS, SEBS), ethyl vinyl acetate (EVA), crystal polyvinyl chloride, plasticised polyvinyl chloride, acetal resins (POM) and their copolymers, polyamides (6.6, 6.10, 6.11 and 6.12), polysulphones, polyphenylene ether (PPE), olefinic elastomers (EPR and EPDM), cellulose acetate and TUP (thermoplastic urethane).

This process can also be applied to all possible mixtures of the said thermoplastic polymers, individual mixtures and mixtures made by crimping or with the use of compatibilisers.

The process in accordance with this invention can also be applied to thermosetting polymers such as phenol resins, melamine resins and phenol-melamine resins.

The colouring and/or compounding process in the press in accordance with this invention can also be applied to recycled and post-consumption materials in the form of ground polymers, agglomerates and flakes, even if already coloured, as the existing colour can be corrected to the desired colour.

For example, neutral, green, amber, blue, etc. flakes of used PET bottles can be coloured. Colouring in a wide range of shades has been performed in accordance with the procedure forming the subject of this invention with excellent results in the case of both opaque and transparent end products. The colour of ground white ABS originating from recycling of household appliances in numerous colours, including various shades of grey, has also been corrected. The process in accordance with this invention has also produced very good colouring of polymer mixtures formed by virgin and recycled material, such as granules + ground polymers or granules + agglomerates.

The process in accordance with this invention also allows translucent or low-opacity materials to be coloured and/or compounded (e.g. articles made of transparent or coloured PP). In view of the greater dispersibility of the colorants used, their physical form and highly precise metering, products with these characteristics, in which the quality of the end product is better in terms of absence of defects, more uniform colour and replicability of colour, can be obtained directly in the press.

The colorants and/or additives used in the process in accordance with this invention are colorants and/or chemicals or fillers in the form of powders, microgranules, microflakes or flakes.

Colorants in the form of microgranules and microflakes known by the tradenames LEDisperse® and Holcobatch® have proved particularly suitable for use in the process in accordance with this invention. The colorant known by the tradename LEDisperse®, manufactured by Clariant, is a concentrate of colorants and/or additives dispersed in a base consisting of mixtures of esters of fatty acids with a melting point of approx. 80°C, obtained by mixing in a turbomixer. The colorant known by the tradename Holcobatch®, manufactured by Holland Colour, is a concentrate of colorants and/or additives dispersed in a base consisting of mixtures of esters of fatty acids with a melting point of approx. 80°C, obtained by mixing in an extruder fitted with a vibrating head, or obtained with various mixing methods. In addition, the colorants and/or additives used in the process in accordance with this invention can be constituted by concentrates of colour and/or additives dispersed in a chemical base.

These colorants can be used individually or in mixtures in any proportion.

In particular, at stage 1) of the process in accordance with this invention, namely the colour-matching stage, the intrinsic colour of the polymer to be coloured and/or compounded is measured and the exact qualitative and quantitative composition of the colorants which need to be used to produce the desired colour is identified by comparison with a specimen of the desired colour.

A spectrophotometer exactly measures the visible spectrum of a specimen of the desired colour, exactly measures the intrinsic colour of the thermoplastic and/or thermosetting polymer to be coloured, and converts it to an item of numerical data. This numerical data item is processed by a specific software program to obtain a precise qualitative and quantitative indication of the colorants that need to be used to obtain the desired final colour.

This program enables "recipes" to be devised for polymers that are very different in terms of both colour and physical form.

The colour matching stage also takes account of all variables which depend on the type of press, such as the diameter and profile of the screw, the compression ratio, the diameter, the length/diameter ratio, the form of the injection and the mould, and the process conditions. All these variables are considered by the control system of the colour matching stage so as to produce optimum results on variation of the press, even with very different injection systems.

In practice the software program, ie. the colour matching control system, identifies the qualitative and quantitative composition of the colorant required to produce a final plastic product with a specific, precise colour, and also takes account of all moulding conditions and the press and raw materials used.

At stage 2), the colorants and/or additives in powder, microgranule or microflake form are weighed and then mixed; weighing can be performed manually or automatically. The exact quantities of the individual constituents, which may be constituted by the different monochrome colorants needed to obtain the final desired colour and/or any additives, are then mixed in a rotary mixer to produce a perfectly homogenous mixture; the result is complete, optimum mixing of constituents with a different physical form, chemical nature, apparent density and specific gravity.

The rotary mixer may be of any shape; in particular it could be cubic, rotating around an axis of symmetry passing through two opposite corners.

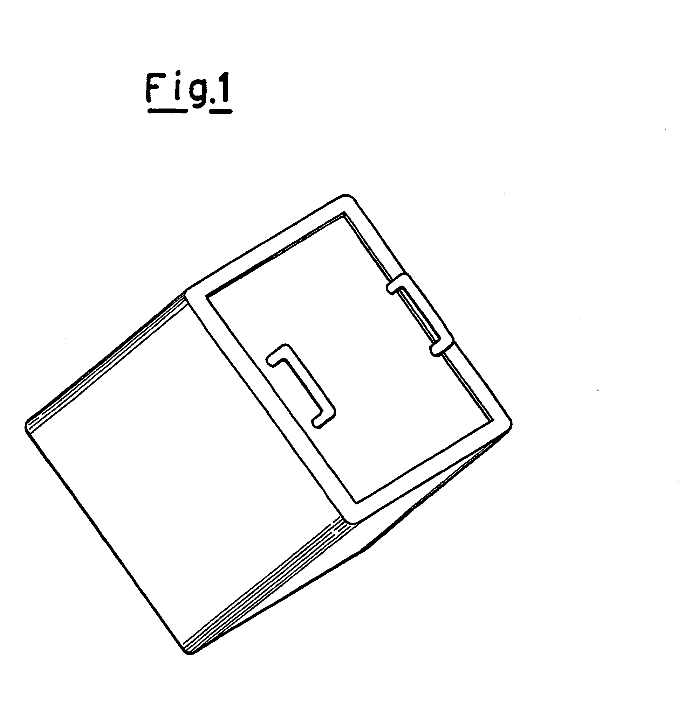

For example, the rotary mixer shown in figure 1 produces complete, optimum mixing of all constituents and also allows easy, fast, thorough cleaning of all inner surfaces.

It can be made of mirror-finish stainless steel 316 L or steel with internal mirror polish and/or chrome-plated, with a length of 70 cm and corners r=5, without welds on the corners and with the welds polished.

The following additives or chemical modifiers can be added directly in the injection-moulding press or in the blow-moulding press when the process in accordance with the invention is used: UV stabilisers, thermostabilisers, crimpers, antistatics, plasticisers, softeners, mineral-based fillers and/or glitters.

As mentioned, the mixture thus obtained is loaded into a suitable metering unit in which it is exactly measured out in a predetermined, measured quantity. The mixture can be loaded manually into the metering unit or automatically into the metering unit positioned exactly on the injection press or on the blow-moulding press.

The mixture can be loaded into the metering unit through a hopper.

In particular, the hopper may be made of mirror-finish stainless steel with polished welds and no angles exceeding 35°; these characteristics make it particularly suitable for the device in accordance with this invention.

In fact, this solution provides optimum flow of the mixture in the hopper, preventing segregation of the constituents of the mixture. However, the standard hoppers normally used in metering units for presses also give acceptable results.

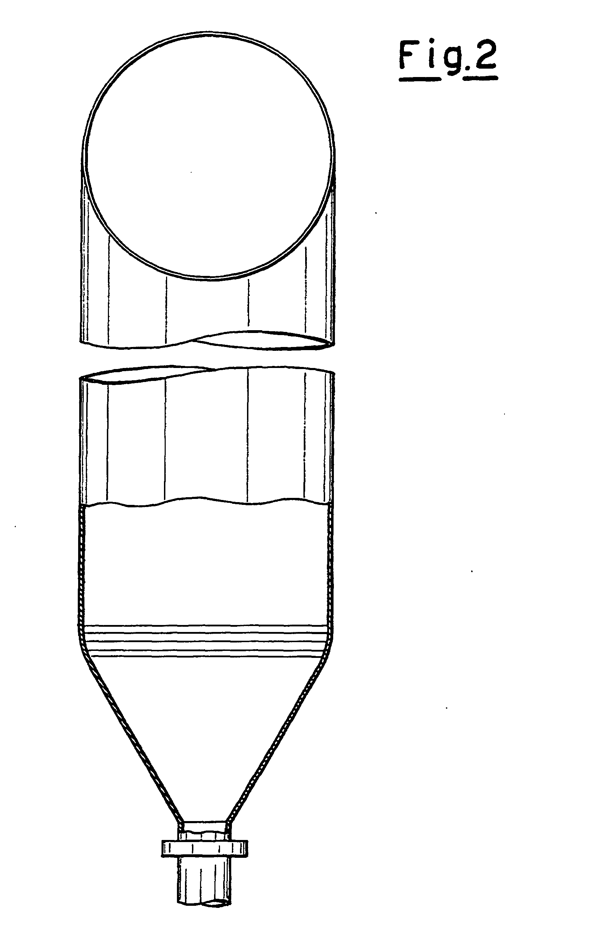

Although various types of hopper used present the said characteristics, in that the hopper is adapted to the type of press used by the system, two hoppers will preferably be used. The first, shown in figure 2, is made of mirror-finish stainless steel with polished welds; this is the most suitable type of hopper because it presents an inclination of approx 30°, so that mass flow is ensured (there is no stagnation or segregation). It can only be used in association with an automatic (pneumatic) loading system because of its small capacity.

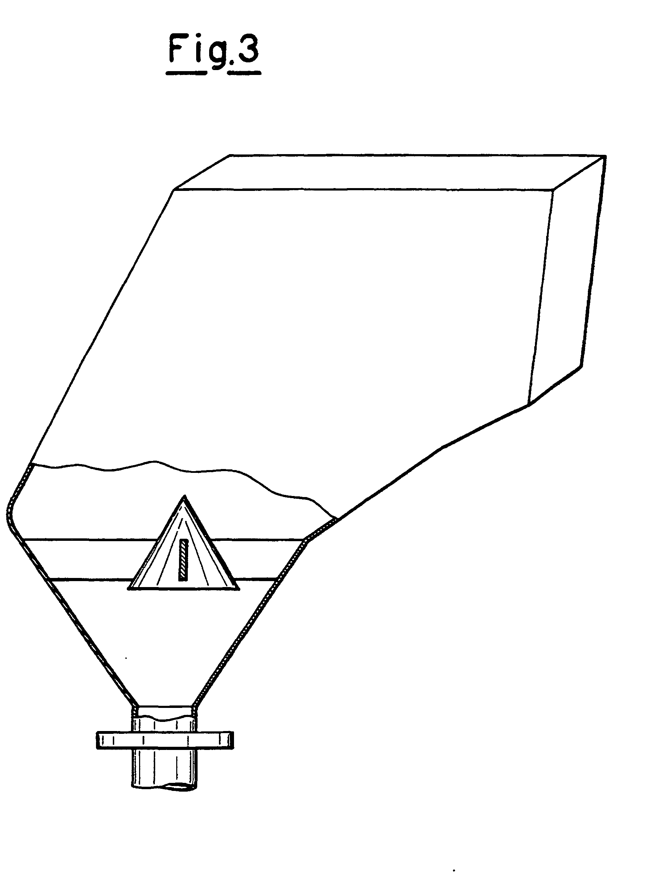

A second type of hopper usable with the process and device in accordance with this invention, shown in figure 3, is also made of mirror-finish stainless steel with polished welds, and a conical bridge-breaker inside it to prevent the formation of bridges of material, thus improving the internal flow of the mixture.

The presence of the hopper thus produces optimum flow of the powder, microgranules or microflakes.

In particular, the metering unit of the device in accordance with this invention presents a very unusual metering system which allows constant, optimum metering of the mixture of colorants and/or additives for any type of flow rate, even very small ones.

This metering unit can be either volumetrically or gravimetrically controlled.

In the case of volumetric control, the metering unit of the device in accordance with this invention is self-regulating on the basis of suitable moulding parameters, which can be input into the software control system of the microprocessor to which it is connected. These parameters are weight of moulded item, percentage of colour required, press screw loading time and material flow index.

The batcher of the device in accordance with this invention is able to operate with very high precision, even without the weight calibration which is necessary with many other systems. In particular, the "flow index" parameter is calculated in numerical form when the qualitative and quantitative composition of the colorant and/or additive is identified; this parameter enables the metering unit to regulate itself for exact metering of the composition needed to obtain the desired result, and the long weighing and calibration operation normally required with volumetric-control metering units is therefore eliminated.

Thanks to this system, the metering unit of the device in accordance with this invention offers performance and speed of use better than or equal to those of the far more expensive gravimetric-control metering units. In fact, a gravimetric-control metering unit that can be used in an injection press costs roughly four times as much as a volumetric-control metering unit.

A practical example of the said stages of the process is as follows. If a given number of chairs need to be coloured a given shade of green, a comparison is made between a specimen of the colour corresponding to the desired colour and the colour of the starting product to be moulded. The system establishes that 99% of thermoplastic and/or thermosetting polymer, 0.2% of yellow and 0.8% of blue needs to be mixed. For a quantity of chairs weighing 5000 kg, the following formula is calculated: 4950 kg of polymer, 10 kg of yellow and 40 kg of blue. The mixture of colours (50 kg) is weighed, mixed and placed in a container of suitable size near the press. A pneumatic aspirator extracts the mixture from the container and conveys it to the hopper of the metering unit in such a way that the level of the hopper contents remains constant.

Alternatively, this operation can be performed manually by topping up the hopper at set intervals to prevent it from becoming completely empty.

The metering unit parameters are then entered, with 1% of colour to be metered for 1000 g of moulded product (the chair). The material flow index is also entered, while the loading time is read automatically by a sensor connected to the press. If the loading time is 10 seconds, the metering unit regulates itself to dispense 10 g of colour in 10 seconds, ie. 1 g/s. On the basis of the parameters entered, the metering unit will rotate the metering screw, for example, at 28.5 rpm.

The mixture is therefore continually extracted from the container until it is finished. However, production can be stopped at any time, and the colorant stored for a subsequent process.

In practice, the mixture is prepared in batches, in a single operation prior to the moulding process, while the mixture of colours is added to the polymer continuously during the moulding stage.

The metering unit preferably used in the process in accordance with this invention is the Movacolor®. This metering unit is self-regulating on the basis of the moulding parameters, and does not have a metering screw but a cylinder in which the colour advances without being subject to friction or to the pulse input caused by the screw auger. However, any volumetric or gravimetric metering unit could be used.

At stage 3) of the process in accordance with this invention, the mixture is conveyed to the flow of thermoplastic and/or thermosetting granules to be coloured and/or compounded. In particular, the mixture is made to fall in such a way that it intercepts the centre of the flow of thermoplastic and/or thermosetting granules to be coloured and/or compounded to produce a first mixture of raw material/colorant and/or additive. The granules of this first mixture then fall into the press.

If an on-line mixer, such as a rotating-shaft mixer, is installed, the said first mixture falls into the on-line mixer. There, as a result of the thorough mixing performed and the higher temperature in the mixer (due to the flow of hot air which rises by natural convection from the mouth of the press into the mixer), the colorant and/or additive microgranules and/or powders undergo partial softening and stick to the granules of thermoplastic and/or thermosetting material, surrounding and completely covering each individual granule with a layer of colorant and/or additive like a "skin".

The material thus mixed falls into the injection press connected to the mould, possibly via a second mixer, and is then moulded.

The said second mixer could be a static mixer such as a Sulzer® or Koch® mixer, which further improves the quality of the colour.

In the case of blow moulding, which is needed to make hollow plastic products such as bottles, containers and the like, the presses used employ a more complex system in which the molten plastic is first moulded or extruded (extrusion blow moulding) to a first form called a preform. Then the preform, in one stage (one-stage process) or in successive stages (two-stage process) is transferred to a special mould where a flow of compressed air allows the preform to expand against the mould walls, thus producing the finished hollow moulding.

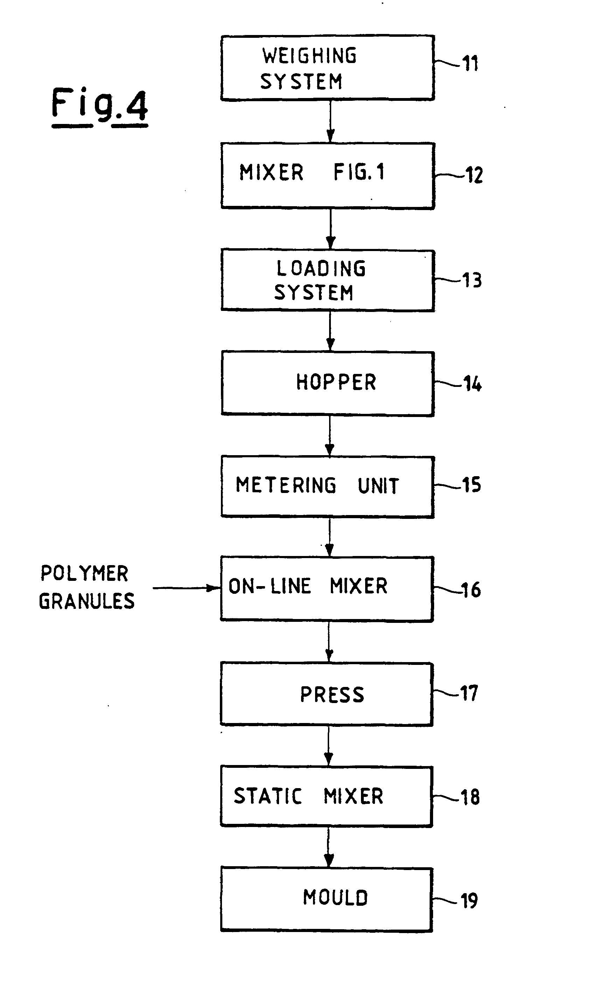

Figure 4 schematically represents a possible embodiment of the device for the application of the process in accordance with this invention. It comprises a manual or automatic weighing system 11 connected to a rotary mixer 12, which is connected in turn to a manual or automatic loading system 13 which, via a hopper 14, introduces the homogenous mixture of colorants and/or additives into a metering unit 15 connected to a microprocessor not shown in the figure. The said metering unit 15 is connected to an on-line mixer 16, and positioned on an injection press 17. The flow of granules of the polymer resin to be coloured and/or compounded is conveyed to the said mixer 16.

The lower injection port of press 17 is connected via a static mixer 18 to a mould 19.

The weighing system 11, loading system 13 and metering unit 15 can be connected to a computerised control and processing system which is connected in turn to a spectrophotometer.

The main advantage of the process in accordance with this invention is that it can be used directly at the injection-moulding stage or at the blow-moulding stage for colouring and/or compounding numerous thermoplastic and/or thermosetting polymers, a wide variety of colours in all possible shades being produced by mixing a few monochrome colouring products which are compatible with all plastics. Above all, the process in accordance with this invention can be applied to already coloured, recycled and post-consumption starting products to produce the exact colour required.

A further advantage of the process in accordance with this invention is the speed with which the desired colouring and/or compounding is performed at the injection-moulding stage or at the blow-moulding stage. Any type of starting material can be given the required colour in a time of approx. 15-30 minutes, a result impossible to obtain with any kind of master batch. This means that colours for special resins or customised colours can be prepared in a very short time.

In addition, the composition of any given shade of colour or the reproduction of any chosen colour can be obtained by mixing a few monochrome colouring products directly in the injection press or in the blow-moulding press. This means that colorants in the form of master batches (predetermined colours for predetermined resins) no longer need to be stocked, thus eliminating numerous expensive colour residues which are of no further use. It is sufficient to keep a few (12-15) basic colours of universal compatibility in stock to colour a huge variety of starting materials in any shade (approx. 95% of the RAL or Pantone chart).

The process in accordance with this invention is performed with colorants which possess a chemical base compatible with nearly all thermoplastic and/or thermosetting polymers.

The cost is therefore much less than that of the process using master batches (20 to 70%, depending on the type of polymer resin to be coloured), firstly because the colorant and/or additives used in the process in accordance with this invention have a very high yield, and secondly because the process eliminates the master batch extrusion operation, which considerably increases the final cost of the master batch, especially in the case of customised colours (ie. those made to the customer's specifications) and small batches, where the fixed extrusion costs are very high.

The process is also cheaper because it allows a smaller quantity of colorant to be used than in the case of master batches, 1-2% of which is normally used. This quantity of colorant saturates the product to be coloured: in fact, the polymer is already coloured with a quantity of master batch exceeding 0.8%, because the colour of the master batch prevails over the colour of the polymer + master batch system, and the final colour is practically identical to that of the master batch. The further quantity of master batch added serves to increase opacity, ie. to reduce the transparency of the system. As conventional metering units are unable to dispense quantities of master batch under 1% with sufficient precision, causing poor colour distribution, overdosing the master batch and saturating the product with colour is preferred; however, this means a considerable wastage of colour because, as mentioned, the excess colorant only slightly increases opacity. The procedure in accordance with this invention allows the addition of the minimum amount of colorant needed to obtain the desired colour and opacity, without wasting colour to saturate the polymer. The resulting saving amounts to 20 to 50% of the quantity of colorant used.

A great advantage of the process in accordance with this invention is its versatility. It can be applied with excellent colouring and/or compounding results to virgin materials, and especially to heterogeneous materials and recycled and post-consumption materials.

Non-standard thermoplastic materials, which normally only have a yellow or greyish colouring and can only be coloured black with known methods, can be coloured in nearly all shades.

The process in accordance with this invention also enables thermoplastic polymers which are difficult to colour with the use of master batches, such as ABS, PPE, and SBS and SEBS thermoplastic rubbers, to be coloured in the press.

In addition, the process in accordance with this invention allows the polymer to be corrected for colour and compounded at the same time, for example with mineral-based fillers, to obtain greater rigidity or other physical characteristics.

The process in accordance with this invention also eliminates all moulding problems associated with poor dispersal and the preferential flow lines of the molten polymer which are present in the master batch colouring process.

## Claims

1. Process for colouring and/or compounding thermoplastic and/or thermosetting polymers directly during the injection-moulding stage or the blow-moulding stage, the method comprising the following stages:
1) a first colour-matching stage at which the intrinsic colour of the polymer to be coloured and/or compounded is measured and compared with a specimen of the colour to be obtained, said colour matching stage taking account of all variables depending on the type of press, the form of the injection and the mould and the process conditions;
2) identifying on the basis of the above comparison the exact qualitative and quantitative composition of the colorants and/or additives needed to obtain the desired final colour,
3) loading a correspondingly weighed mixture thus obtained into a metering unit where it is precisely metered in a predetermined, measured amount and conveyed to the flow of thermoplastic and/or thermosetting granules of said polymer to be coloured and/or compounded;
4) injection-moulding or blow-moulding the so mixed material.

2. Process as claimed in claim 1, wherein the thermoplastic polymer is high- or low-density polyethylene (HOPE and LOPE), linear polyethylene (LLDPE), acrylonitrile-butadiene- styrene (ABS), polypropylene (PP), polymethyl methacrylate (PMMA) and its copolymers, polyethylene terephthalate (PET) and its copolymers, polybutylene terephthalate (PBT) and its copolymers, polycarbonate (PC) and its copolymers, crystal polystyrene (GPPS), high-impact polystyrene (HIPS), styrene acrylonitrile (SAN.), styrene-based elastomers and thermoplastic rubbers (SB, SBS, SEBS), ethyl vinyl acetate (EVA), crystal polyvinyl chloride, plasticised polyvinyl chloride, acetal resins (POM) and their copolymers, polyamides (6.6, 6.10, 6.11 and 6.12), polysulphones, polyphenylene ether (PPE), olefinic elastomers (EPR and EPDM), cellulose acetate, TUP (thermoplastic urethane) and/or mixtures thereof.

3. Process as claimed in claim 2, wherein the mixtures of thermoplastic polymers are individual mixtures and mixtures made by crimping or with the use of compatibilisers.

4. Process as claimed in claim 1, wherein the thermosetting polymer is a phenol resin, a melamine resin or phenol-melamine resin.

5. Process as claimed in claim 1, **characterised in that** the thermoplastic and/or thermosetting polymers are constituted by recycled and post-consumption materials in the form of ground polymers, agglomerates and flakes, even if already coloured.

6. Process as claimed in claim 1, wherein the thermoplastic and/or thermosetting polymers are constituted by neutral, green, amber, blue, etc. flakes of used PET bottles, ground white ABS, or polymer mixtures formed by virgin and recycled material, such as granules ground polymers or granules + agglomerates.

7. Process as claimed in claim 1, wherein the colorants and/or additives are in the form of powders, microgranules, microflakes or flakes.

8. Process as claimed in claim 1, wherein the colorants in the form of microgranules and microflakes are a concentrate of colorants and/or additives dispersed in a chemical base or a base consisting of mixtures of esters of fatty acids with a melting point of approx. 80°C, obtained by mixing in a turbomixer or by mixing in an extruder fitted with a vibrating head, or by other mixing methods.

9. Process as claimed in claim 7 or 8, wherein the colorants can be used individually or mixed in any proportion.

10. Process as claimed in claim 1, wherein the additives or chemical modifiers are chosen from among the following: UV stabilisers, thermostabilisers, crimpers, antistatics, plasticisers, mineral- based fillers and/or glitters.

11. Process as claimed in claim 1, wherein the weighing and metering stages are performed manually or automatically.

12. Process as claimed in claim 1, wherein the mixture is made to fall in such a way that it intercepts the centre of the flow of thermoplastic and/or thermosetting granules to be coloured and/or compounded and the mixture thus obtained is directly moulded or further mixed, each individual granule being thus surrounded and covered with a layer of colorant and/or additive that forms a "skin" around it.

13. Process as claimed in claim 1, wherein the mixture is moulded in a one- or two-stage process involving injection and/or extrusion and/or immersion blow-moulding of preforms.

14. Device for the implementation of the process according to claims 1-13 hereof, which comprises a manual or automatic weighing system (11) for weighing the colorants identified and/or the additives to be loaded, a rotary mixer (12), a manual or automatic loading system (13) for loading the colorant and/or additive mixture, a hopper (14) followed by a metering unit (15) connected to a microprocessor for controlling the metering unit, said metering unit being positioned on an injection-press or on a blow-moulding press (17), said press being connected to a mould (19), the weighing system (11), the loading system (13) and the metering unit (15) being connected to a control and processing system connected to a spectrophotometer, said spectrophotometer measuring the spectrum of a specimen of the desired colour and the intrinsic colour of the thermoplastic and/or thermosetting polymer to be coloured, these data being processed by the control and processing system giving the precise and quantitative indication of the colorants and/or additives to be used to obtain the desired final colour.

15. Device as claimed in claim 14, wherein the metering unit (15) is connected to an on-line mixer (16).

16. Device as claimed in claim 14, wherein the press (17) is connected to an additional static mixer (18) and then to a mould (19).

17. Device as claimed in claim 14, wherein the metering unit (15) is a gravimetrically or volumetrically controlled metering unit.

18. Device as claimed in claim 14, wherein the metering unit (15) is volumetrically controlled.

19. Device as claimed in claim 14, wherein the metering unit (15) has a cylinder and is self-regulating on the basis of the moulding parameters.

20. Device as claimed in claim 14, wherein the rotary mixer (12) has a cubic shape and rotates around an axis of symmetry passing through two opposite corners.

21. Device as claimed in claim 14, wherein the hopper (14) is made of mirror-finish stainless steel with polished welds and no angles exceeding 35°.

22. Device as claimed in claim 14, **characterised in that** on-line mixer (16) is the rotating-shaft type.

23. Device as claimed in claim 14, **characterised in that** the additives or chemical modifiers are added directly in the injection-moulding press or in the blow-moulding press (17), premixed with the thermoplastic and/or thermosetting granules to be coloured, or added continually with a dedicated metering unit.

24. Device as claimed in claim 14, **characterised in that** mixer (18) is a static mixer.

## Revendications

1. Procédé pour colorer et/ou compounder des polymères thermoplastiques et/ou thermodurcissables directement pendant l'étape de moulage par injection ou l'étape de moulage par soufflage, procédé comportant les étapes suivantes :
1) une première étape de reproduction de couleur au cours de laquelle la couleur intrinsèque du polymère à colorer et/ou à compounder est mesurée et comparée avec un échantillon de la couleur à obtenir, ladite étape de reproduction de la couleur prenant en compte l'ensemble des variables dépendant du type de presse, de la forme de l'injection et du moule et des conditions du procédé ;
2) identification sur la base de la comparaison susdite de la composition qualitative et quantitative exacte des colorants et/ou des additifs nécessaires pour obtenir la couleur finale souhaitée ;
3) chargement d'un mélange pesé en correspondance ainsi obtenu dans une unité de mesure où il est mesuré de façon précise selon une quantité mesurée prédéterminée et acheminé vers le flux de granules thermoplastique et/ou thermodurcissables dudit polymère à colorer et/ou à compounder ;
4) moulage par injection ou par soufflage du matériau ainsi mélangé.

2. Procédé selon la revendication 1 dans lequel le polymère thermoplastique est du polyéthylène à haute ou basse densité (HDPE et LDPE), du polyéthylène linéaire (LLDPE), de l'acrylonitrile-butadiène-styrène (ABS), du polypropylène (PP), du polyméthacrylate de méthyle (PMMA) et ses copolymères, du polytéréphtalate d'éthylène (PET) et ses copolymères, du polytéréphtalate de butylène (PBT) et ses copolymères, du polycarbonate (PC) et ses copolymères, du polystyrène cristallin (GPPS), du polystyrène de haute résistance aux chocs (HIPS), de l'acrylonitrile styrène (STAN), des élastomères à base de styrène et des caoutchoucs thermoplastiques (SB, SBS, SEBS), de l'éthylvinylacétate (EVA), du chlorure de polyvinyle cristallin, du chlorure de polyvinyle plastifié, des résines acétal (POM) et leurs copolymères, des polyamides (6.6, 6.10, 6.11 et 6.12), des polysulfones, du polyphénylène éther (PPE), des élastomères oléfiniques (EPR et EPDM), de l'acétate de cellulose , du TUP (uréthanne thermoplastique) et/ou leurs mélanges.

3. Procédé selon la revendication 2, dans lequel les mélanges de polymères thermoplastiques sont des mélanges individuels et des mélanges réalisés par sertissage ou en utilisant des agents de compatibilité.

4. Procédé selon la revendication 1, dans lequel le polymère thermodurcissable est une résine phénolique, une résine de mélamine ou une résine de phénol-mélamine.

5. Procédé selon la revendication 1, **caractérisé en ce que** les polymères thermoplastiques et/ou thermodurcissables sont constitués de matériaux, recyclés et ayant déjà été utilisés, sous la forme de polymères broyés, d'agglomérats et de flocons, même s'ils ont déjà été colorés.

6. Procédé selon la revendication 1, dans lequel les polymères thermoplastiques et/ou thermodurcissables sont constitués par des flocons de bouteilles en PET déjà utilisées incolores, verts, ambrés, bleus etc., de l'ABS blanc broyé, ou des mélanges de polymères formés de matériau vierge et recyclé, tel que des polymères broyés en granules ou des granules + agglomérats.

7. Procédé selon la revendication 1, dans lequel les colorants et/ou les additifs se trouvent sous la forme de poudres, de microgranules, de microflocons ou de flocons.

8. Procédé selon la revendication 1, dans lequel les colorants se trouvant sous la forme de microgranules et de microflocons sont un concentré de colorants et/ou d'additifs dispersés dans une base chimique ou une base constituée de mélanges d'esters d'acides gras ayant un point de fusion de 80° C environ, obtenus par mélange dans un turbomélangeur ou mélange dans un extrudeur adapté à une tête vibrante ou suivant d'autres procédés de mélange.

9. Procédé selon la revendication 7 ou 8, dans lequel les colorants peuvent être utilisés individuellement ou mélangés dans une proportion quelconque.

10. Procédé selon la revendication 1, dans lequel les additifs ou les modificateurs chimiques sont choisis à partir des produits suivants : stabilisateurs d'UV, thermostabilisateurs, agents de sertissage, antistatiques, plastifiants, charges à base minérale et/ou produits scintillants.

11. Procédé selon la revendication 1, dans lequel les étapes de pesée et de mesure sont exécutées manuellement ou automatiquement.

12. Procédé selon la revendication 1, dans lequel le mélange est réalisé pour tomber de telle façon qu'il intercepte le centre du flux de granules thermoplastiques et/ou thermodurcissables à colorer et/ou à compounder et le mélange ainsi obtenu est moulé directement ou mélanger encore, chaque granule individuel étant ainsi entouré et recouvert d'une couche de colorant et/ou d'additif qui forme une "peau" autour de lui.

13. Procédé selon la revendication 1, dans lequel le mélange est moulé dans un processus à une ou deux étapes impliquant une injection et/ou une extrusion et/ou un moulage par soufflage par immersion de préformes.

14. Dispositif pour la mise en oeuvre du procédé selon les revendications 1 à 13, lequel comporte un système de pesée manuel ou automatique (11) pour peser les colorants identifiés et/ou les additifs à charger, un mélangeur rotatif (12), un système de chargement manuel ou automatique (13) pour charger le mélange de colorant et/ou d'additif, une trémie (14) suivie d'une unité de mesure (15) connectée à un microprocesseur pour commander l'unité de mesure, ladite unité de mesure étant positionnée sur une presse à injection ou sur une presse de moulage par soufflage (17), ladite presse étant connectée à un moule (19), le système de pesée (11), le système de chargement (13) et l'unité de mesure (15) étant connectés à un système de commande et de traitement relié à un spectrophotomètre, ledit spectrophotomètre mesurant le spectre d'un échantillon de la couleur souhaitée et la couleur intrinsèque du polymère thermoplastique ou thermodurcissable à colorer, ces données étant traitées par le système de commande et de traitement donnant l'indication précise et quantitative des colorants et/ou des additifs à utiliser pour obtenir la couleur finale souhaitée.

15. , Dispositif selon la revendication 14, dans lequel l'unité de mesure (15) est connectée à un mélangeur en ligne (16).

16. Dispositif selon la revendication 14, dans lequel la presse (17) est connectée à un mélangeur statique supplémentaire (18) et ensuite à un moule (19).

17. Dispositif selon la revendication 14, dans lequel l'unité de mesure (15) est une unité de mesure commandée par gravimétrie ou volumétrie.

18. Dispositif selon la revendication 14, dans lequel l'unité de mesure (15) est commandée par volumétrie.

19. Dispositif selon la revendication 14, dans lequel l'unité de mesure (15) possède un cylindre et s'autorégule sur la base des paramètres de moulage.

20. Dispositif selon la revendication 14, dans lequel le mélangeur rotatif (12) présente une forme cubique et tourne autour d'un axe de symétrie passant par deux angles opposés.

21. Dispositif selon la revendication 14, dans lequel la trémie (14) est fabriquée en acier inoxydable poli miroir présentant des soudures polies et sans aucun angle dépassant 35°.

22. Dispositif selon la revendication 14, **caractérisé en ce que** le mélangeur en ligne (16) est du type à arbre de rotation.

23. Dispositif selon la revendication 14, **caractérisé en ce que** les additifs ou les modificateurs chimiques sont ajoutés directement dans la presse de moulage par injection ou dans la presse de moulage par soufflage (17), prémélangés avec les granules thermoplastiques et/ou thermodurcissables à colorer, ou ajoutés en continu avec une unité de mesure spécialisée.

24. Dispositif selon la revendication 14, **caractérisé en ce que** le mélangeur (16) est un mélangeur statique.

## Patentansprüche

1. Verfahren zum Färben und/oder Mischen thermoplastischer und/oder wärmehärtbarer Polymere unmittelbar während der Spritzformstufe oder der Blasformstufe, das folgende Schritte umfasst:
1) eine erste Stufe zur Farbabstimmung, in der die Eigenfarbe des Polymers, das gefärbt und/oder gemischt werden soll, gemessen und mit einer Probe der Farbe, die erhalten werden soll, verglichen wird, wobei die Farbabstimmungsstufe sämtliche Variablen in Erwägung zieht, die von der Art der Presse, der Form der Einspritzung und den Form- und Verfahrensbedingungen abhängt;
2) das Identifizieren der genauen qualitativen und quantitativen Zusammensetzung der farbgebenden Mittel und/oder Additive, die zum Erhalt der erwünschten Endfarbe erforderlich sind, auf der Grundlage des vorstehenden Vergleichs;
3) Laden eines auf dieser Weise erhaltenen entsprechend abgewogenen Gemischs in eine Dosiereinheit, wo sie in einer vorher festgelegten, abgemessenen Menge genau dosiert und in den Strom thermoplastischer und/oder wärmehärtender Körnchen des Polymers, das gefärbt und/oder gemischt werden soll, eingeleitet wird;
4) Spritzformen oder Blasformen des auf diese Weise gemischten Materials.

2. Verfahren nach Anspruch 1, in dem es sich bei dem thermoplastischen Polymer um Polyethylen von hoher oder niedriger Dichte (HDPE und LDPE), lineares Polyethylen (LLDPE), Acrylnitril-Butadien-Styrol (ABS), Polypropylen (PP), Polymethylmethacrylat (PMMA) und dessen Copolymere, Polyethylenterephthalat (PET) und dessen Copolymere, Polybutylenterephthalat (PBT) und dessen Copolymere, Polycarbonat (PC) und dessen Copolymere, Kristallpolystyrol (GPPS), hochschlagzähes Polystyrol (HIPS), Styrolacylnitril (SAN), Elastomere auf Styrolbasis und thermoplastische Kautschukarten (SB, SBS, SEBS), Ethylvinylacetat (EVA), Kristallpolyvinylchlorid, plastifiziertes Polyvinylchlorid, Acetalharze (POM) und deren Copolymere, Polyamide (6,6, 6,10, 6,11 und 6,12), Polysulfone, Polyphenylenether (PPE), olefinische Elastomere (EPR und EPDM), Celluloseacetat, TUP (thermoplastisches Urethan) und/oder deren Gemische handelt.

3. Verfahren nach Anspruch 2, bei dem die Gemische von thermoplastischen Polymeren individuelle Gemische und Gemische sind, die durch Kräuseln oder unter Verwendung von Mitteln zur Verbesserung der Kompatibilität hergestellt wurden.

4. Verfahren nach Anspruch 1, bei dem das wärmehärtbare Polymer ein Phenolharz, ein Melaminharz oder Phenolmelaminharz ist.

5. Verfahren nach Anspruch 1, **dadurch gekennzeichnet, dass** die thermoplastischen und/oder wärmehärtbaren Polymere durch recycelte und gebrauchte Materialien in Form gemahlener Polymere, Agglomerate und Flocken, die sogar bereits gefärbt sein können, gebildet werden.

6. Verfahren nach Anspruch 1, bei dem die thermoplastischen und/oder wärmehärtbaren Polymere durch neutrale, grüne, bernsteinfarbene, blaue usw. Flocken gebrauchter PET-Flaschen, gemahlenes weißes ABS oder Polymergemische aus frischem und recyceltem Material wie zu Granulat gemahlenen Polymeren oder Granulat und Agglomeraten gebildet werden.

7. Verfahren nach Anspruch 1, bei dem die farbgebenden Mittel und/oder Additive in Form von Pulvern, Mikrogranulat, Mikroflocken oder Flocken vorliegen.

8. Verfahren nach Anspruch 1, bei dem die farbgebenden Mittel in Form von Mikrogranulat und Mikroflocken ein Konzentrat von farbgebenden Mitteln und/oder Additiven sind, die in einer chemischen Base oder einer aus Gemischen von Fettsäureestern mit einem Schmelzpunkt von etwa 80°C bestehenden Base dispergiert sind, welche durch Mischen in einem Turbomixer oder einem mit Schwingkopf ausgerüsteten Extruder oder durch andere Mischverfahren erhalten wurden.

9. Verfahren nach Anspruch 7 oder 8, bei dem die farbgebenden Mittel einzeln verwendet oder in beliebigem Verhältnis gemischt werden können.

10. Verfahren nach Anspruch 1, bei dem die Additive oder chemischen Modifiziermittelaus folgenden ausgewählt werden: UV-Stabilisierungsmitteln, Thermostabilisierungsmitteln, Kräuselungsmitteln, antistatischen Mitteln, Weichmachern, Füllstoffen auf Mineralbasis und/oder Glanzmitteln.

11. Verfahren nach Anspruch 1, bei dem die Einwiege- und Dosierschritte manuell oder automatisch durchgeführt werden.

12. Verfahren nach Anspruch 1, bei dem das Gemisch veranlasst wird, so zu fallen, das es die Mitte des Stroms aus thermoplastischem und/oder wärmehärtbarem Granulat, das gefärbt und/oder gemischt werden soll, genau trifft und das auf diese Weise erhaltene Gemisch direkt geformt oder weiter gemischt wird, wobei jedes einzelne Granulat auf diese Weise mit einer Schicht aus farbgebendem Mittel und/oder Additiv, die um es herum eine "Haut" bildet, umhüllt oder bedeckt wird.

13. Verfahren nach Anspruch 1, bei dem das Gemisch in einem Ein- oder Zweistufenverfahren geformt wird, das das Einspritzen und/oder Strangpressen und/oder das Eintauchblasformen von Vorformlingen beinhaltet.

14. Vorrichtung zur Durchführung des Verfahrens nach Anspruch 1 bis 13, die umfasst: ein manuelles oder automatisches Einwiegesystem (11) zum Einwiegen der identifizierten farbgebenden Mittel und/oder der einzubringenden Additive, einen Rotationsmixer (12), ein manuelles oder automatisches Beladesystem (13) zum Beladen mit dem farbgebenden Mittel und/oder Additivgemisch, einen Trichter (14), an den sich eine Dosiereinheit (15) anschließt, die mit einem Mikroprozessor zur Steuerung der Dosiereinheit verbunden ist, wobei die Dosiereinheit auf einer Spritzformpresse oder einer Blasformpresse (17) positioniert ist, wobei die Presse mit einer Form (19) verbunden ist, wobei das Einwiegesystem (11), das Beladesystem (13) und die Dosiereinheit (15) mit einem Steuerungs- und Prozessorsystem verbunden sind, das an einen Spektrophotometer angeschlossen ist, wobei dieser Spektrophotometer das Spektrum einer Probe der erwünschten Farbe und die Eigenfarbe des zu färbenden thermoplastischen und/oder wärmehärtbaren Polymers misst und diese Daten durch das Steuerungs- und Prozessorsystem verarbeitet werden, so dass die farbgebenden Mittel und/oder Additive, die zum Erhalt der erwünschten Endfarbe verwendet werden sollen, präzise und quantitativ angegeben werden.

15. Vorrichtung nach Anspruch 14, bei der die Dosiereinheit (15) mit einem On-Line-Mixer (16) verbunden ist.

16. Vorrichtung nach Anspruch 14, bei der die Presse (17) mit einem zusätzlichen statischen Mixer (18) und dann mit einer Form (19) verbunden ist.

17. Vorrichtung nach Anspruch 14, bei der die Dosiereinheit (15) eine gravimetrisch oder volumetrisch gesteuerte Dosiereinheit ist.

18. Vorrichtung nach Anspruch 14, bei der die Dosiereinheit (15) volumetrisch gesteuert wird.

19. Vorrichtung nach Anspruch 14, bei der die Dosiereinheit (15) einen Zylinder aufweist und sich auf der Grundlage der Formparameter selbst regelt.

20. Vorrichtung nach Anspruch 14, bei der der Rotationsmixer (12) eine kubische Form hat und sich um eine durch zwei gegenüberliegende Ecken verlaufende Symmetrieachse dreht.

21. Vorrichtung nach Anspruch 14, bei der der Trichter (14) aus rostfreiem Hochglanzstahl mit polierten Schweißnähten und ohne Winkel von mehr als 35° besteht.

22. Vorrichtung nach Anspruch 14, **dadurch gekennzeichnet, dass** der On-Line-Mixer (16) vom Typ mit rotierendem Schaft ist.

23. Vorrichtung nach Anspruch 14, **dadurch gekennzeichnet, dass** die Additive oder chemischen Modifiziermittel direkt in die Spritzformpresse oder in die Blasformpresse (17) gegeben werden, in denen das thermoplastische und/oder wärmehärtbare Granulat, das gefärbt werden soll, vorher vermischt wurde, oder durch eine zweckbestimmte Dosiereinheit kontinuierlich zugesetzt werden.

24. Vorrichtung nach Anspruch 14, **dadurch gekennzeichnet, dass** der Mixer (18) ein statischer Mixer ist.
